Europäisches Patentamt

European Patent Office

Office européen des brevets

(11) Publication number: **0 209 324**
**A2**

(12) **EUROPEAN PATENT APPLICATION**

(21) Application number: 86305313.8

(22) Date of filing: 10.07.86

(51) Int. Cl.⁴: **C09D 3/82** , C08L 83/04

(30) Priority: 11.07.85 CA 486683

(43) Date of publication of application:
21.01.87 Bulletin 87/04

(84) Designated Contracting States:
AT BE CH DE FR GB IT LI LU NL SE

(71) Applicant: Soluri, Guido
3515 Havenwood Drive Unit 31
Mississauga Ontario L4X 2M6(CA)
Applicant: Soluri, Giuseppe
3515 Havenwood Drive Unit 31
Mississauga Ontario L4X 2M6(CA)

(72) Inventor: Soluri, Giuseppe
3515 Havenwood Drive Unit 31
Mississauga Ontario L4X 2M6(CA)

(74) Representative: Hands, Horace Geoffrey et al
GEORGE FUERY & CO Whitehall Chambers
23 Colmore Row
Birmingham B3 2BL(GB)

(54) **Waterproofing compound.**

(57) A flowable and paintable waterproofing and coating composition especially intended for application to footwear and the like comprises a room temperature vulcanisable one-component silicone material containing reactive acetoxy groups and adapted to cure to a flexible polymer upon exposure to atmospheric moisture with the release of acetic acid and a volatile solvent for said silicone material, said solvent being unreactive with said silicone material and being present in an amount sufficient to soften said silicone material to provide a flowable and paintable composition but in an amount no greater than that which is capable of freely evaporating from a film of such composition during the curing of such a film after application of such a composition as a film to a substrate.

## WATERPROOFING COMPOUND

The present invention relates generally to coating compositions and more particularly to coating compositions especially intended for waterproofing materials such as leather, canvas and synthetic materials such as nylon, polyurethane and the like and is of particular application to the waterproofing of footwear, such as shoes, boots and the like.

The invention also embraces a method of forming a protective coating on such a substrate as well as substrates having such protective coatings formed thereon.

Numerous materials have heretofore been proposed for impregnating and treating such materials as leather, canvas and the like to render them, if not water-resistant, at least water repellant.

Usually these materials are based on an attempt to combine in some way chemically or physically with the substrate material so as to render it impermeable to moisture and the like.

Known materials of this kind can be reasonably effective at least when first applied although it is well known that they gradually break down and moisture can then permeate the substrate once more.

However, with repeated applications, there is a reasonable prospect that such materials will perform the intended purpose.

It is, however, well known that in modern urban conditions in winter, it is not sufficient merely to have a substrate which is merely rendered waterproof. Many harmful chemical compounds are present in city streets. The principal chemical ingredient is common salt. Other ingredients are salt substitutes such as calcium chloride which is commonly used as a substitute for salt in an effort to break up ice or snow. Other harmful chemicals on city streets include petroleum products, and acid residues such as sulphuric and hydrochloric acids and simple dust, dirt and sand.

Any of these chemicals can attack a substrate material such as leather, nylon or the like, even when the substrate has been rendered waterproof or water-repellant. Thus, for example, leather boots and shoes, even when treated with typical waterproofing materials, are rapidly attacked by, for example, salt on city streets. Once stained with salt, it is almost impossible to remove such a stain, and the salt gradually eats away the leather and causes it to crack.

Obviously, once the substrate material is cracked or broken, no amount of waterproofing compound will ever render it totally waterproof.

Footwear for winter use is also available made of other materials which are totally impervious to both water and chemical attack, such as vinyl materials and the like. However, these are both harmful to the feet, since they do not permit perspiration and are also aesthetically unattractive.

This invention is directed to a somewhat different concept, namely the application of a flexible waterproof coating to a substrate and which coating will cure after application and then act as an essentially complete barrier between the substrate material and moisture and destructive chemicals and the like.

In effect, the end result will be a substrate on which there is provided a flexible coating, which coating is capable of flexing in the same manner as the substrate material without cracking or becoming broken.

The coating layer should be such that it can be applied at will by the end user, simply by wiping or painting it onto the product such as a pair of boots or shoes.

In other cases, the coating layer may be applied in the course of manufacture, after which the substrate material can be cut, shaped, sewn and the like, in the normal way.

With a view to overcoming these various disadvantages and providing a flowable and paintable waterproofing and coating composition especially intended for application to footwear and having the foregoing advantages, the present invention provides a composition which comprises a room temperature vulcanisable one-component silicone material containing reactive acetoxy groups and adapted to cure to a flexible polymer upon exposure to atmospheric moisture with the release of acetic acid and a volatile solvent for said silicone material, said solvent being unreactive with said silicone material and being present in an amount sufficient to soften said silicone material to provide a flowable and paintable composition but in an amount no greater than that which is capable of freely evaporating from a film of such composition during the curing of such a film after application of such a composition as a film to a substrate.

This invention also embraces a coated substrate, such as leather, canvas or the like, having disposed thereon a cured film of a coating composition as taught by this invention. Such a substrate may, for example, comprise an item of footwear such as a shoe, boot or the like.

The silicone materials used in the compositions provided by the present invention are well known commercially available materials used, for example, for sealing around bathtubs, shower enclosures and the like as well as for potting electrical terminals, sealing ammunition fuses and for other similar purposes. These materials also referred to as elastomers, rubbers and sealants are fully described in current trade and technical literature and comprise unsubstituted and substituted polymethylsiloxanes and also contain reactive acetoxy groups. On exposure to atmospheric moisture, these silicone materials cure with the release of acetic acid (such curing also being referred to as vulcanisation) at room temperature without the addition of any separate co-reactant. This fact has led to their generic description as being "Room Temperature Vulcanisable" or "RTV". It should perhaps be further explained that, in referring to these silicone materials as "one-component" materials, it is not intended to imply that they can contain only one component. Instead, it means that the silicone material is a single component and does not require the addition of a second component or material immediately prior to use to initiate vulcanisation, as is the case with the known two-component systems.

For example, some of the known one-component silicone materials which are especially useful in the compositions of this invention contain two components, one being a hydroxy-terminated polydimethylsiloxane and the second being a cross-linking agent which contains the aforementioned acetoxy groups. Furthermore, the silicone materials which are used in the coating compositions of this invention may also contain curing catalysts which are effective to initiate or accelerate the vulcanisation of the material only, however, after its exposure to atmospheric moisture.

It is also useful to note at this juncture that these known RTV silicone materials cure from the outside inwardly. Initially, the surface of the silicone material reacts with atmospheric moisture to form a surface skin. On continued exposure to atmospheric moisture, this surface skin progressively thickens as the cure extends further and further into the material.

Typical silicone materials used in the compositions of this invention are :

1. Dow Corning 786 Mildew-Resistant Silicone Sealant;

2. Silastic 734 RTV Self-Leveling Adhesive/Sealant;

3. Silastic 732 RTV Adhesive/Sealant;

4. CGE Silicone Bathtub Seal;

5. CSL Silicone Tub Seal Kit; and

6. Lepage General Purpose Sealant.

The first three materials are available from Dow Corning Corporation, Midland, Michigan, U.S.A., "Silastic" and "Dow Corning" being registered trademarks of that Company. The CGE Silicone Bathtub Seal material is a similar material which is available from Canadian General Electric, Toronto, Ontario, Canada. CSL Silicone Tub Seal Kit is again a similar material which is available from CSL Silicones Inc., Guelph, Ontario, Canada. The Lepage material is available from Lepages Adhesives Ltd., Bramalea, Ontario, Canada and contains a Dow Corning silicone material.

These particular materials will be referred to again as the description herein proceeds and, for convenience, will be identified in abbreviated form by the underlined words. It should perhaps further be noted that the Dow Corning 786, the CGE and the CSL silicone materials all contain titanium dioxide as a white pigment.

As already indicated, the compositions provided by this invention also contain a volatile solvent. While the chemical nature of the solvent which is used is not in itself important, there are certain criteria which must be met in selecting a suitable solvent for use with a particular silicone material for a particular application. Naturally, the solvent should first of all be one which is unreactive toward the silicone material. For example, it is to be noted that alcohols such as methanol cannot be used in view of the reactivity of their hydroxyl groups with the silicone materials. Additionally, the solvent must be sufficiently volatile to evaporate sufficiently quickly under ambient conditions after application of the composition to a substrate. It should further be understood that the volatility of the solvent is also related to the amount of solvent present, to the thickness of the coating and to the curing characteristics of the silicone material. After application of a coating composition in accordance with this invention, two things start to happen. Firstly, the solvent commences to evaporate. Secondly, the silicone material commences to react with atmospheric moisture and this eventually leads to the formation of a surface skin on the coating. At some stage during the curing/drying operation, this skin becomes sufficiently well formed to provide a barrier to the further evaporation of the solvent and, if at such stage, unevaporated solvent still remains in the coating, its evaporation will then lead to the formation of bubbles beneath and in the skin. This is clearly an undesirable effect. In view of this restriction, the selection of a suitable solvent is governed not only by the curing characteristics of the silicone material but also by the desired thickness of the coating since any increase in such thickness will result in the need for the evaporation of a greater amount of solvent per unit surface area prior to the formation of a solvent barrier skin.

While the relative proportions of silicone material and solvent will vary somewhat depending upon the natures of the component materials, it can generally be indicated that solvent concentrations within the range of from about 40% to about 60% based on the total volume of the silicone material and the solvent appear generally to yield optimum results.

Suitable solvents for use in the compositions of this invention are petroleum distillates, turpentine, unsubstituted and substituted aliphatic and aromatic hydrocarbons, ethers and ketones. A typical petroleum distillate which has been found to be very effective in these novel compositions is the material commercially available under the Registered Trade Mark "Varsol" from Imperial Oil Limited, Toronto, Ontario, Canada. Although the precise composition of this material may vary, it is in fact a mixture of paraffinic, cyclic and aromatic hydrocarbons. Heptane, benzene, xylenes and tetrachloroethylene are examples of unsubstituted and substituted aliphatic and aromatic hydrocarbons which have proved to be effective in the compositions of this invention. Butanone-2 and di-n-butylether are specific examples of other suitable solvents.

It is also possible in accordance with this invention to incorporate in the coating compositions provided thereby a minor amount of a catalyst or drying agent which is effective to accelerate the curing or vulcanisation of the silicone material. One such material which appears to have provided such a catalytic effect when used with the aforementioned Lepage silicone material is that available under the trade name "Sheffield Japan Dryer" from Sheffield Bronze Inc., Toronto, Ontario, Canada. This material is said to contain cobalt naphthenate, a well known paint drying agent, as well as calcium and magnesium compounds. Other catalysts and agents can of course be used provided that they are unreactive toward the silicone material until such time as the composition is exposed to atmospheric moisture.

The coatings of this invention can also be modified further by the inclusion of a dyestuff or pigment and once again the only critical parameter in selecting such an additive is that it be unreactive toward the silicone material. In the case where no dyestuff or pigment is to be used and the silicone material is one which is clear or transparent, it has been found that certain solvent/silicone material combinations yield cured coatings or films which are slightly cloudy. This is particularly noticeable in the case of thicker films. For example, when the aforementioned Lepage silicone material is used with Varsol as the solvent, some cloudiness is noticeable in thicker films. It has been found that such cloudiness can be somewhat reduced by the addition to the coating composition of a material known for the treatment of aquarium water and available under the Registered Trade Mark "Brite N' Clear" from Mardel Laboratories, Glendale Heights, Illinois, U.S.A. This material is an aqueous solution of aluminum sulphate, sodium thiosulphate and sodium bicarbonate. While the compositions of the invention are adversely affected by the addition of water, it would appear that the amount of water introduced into such compositions by the addition of a very small amount of this particular product is insufficient to do any serious harm to the composition while still being somewhat beneficial from the point of view of improving the clarity of the cured film.

The compositions of this invention are formulated by mixing the various components thereof to form a flowable and paintable composition. When so formulated, the compositions will often be flammable depending, however, on the flammability of the solvent and must be kept securely sealed not only to prevent evaporation of the solvent but also to prevent contact of the silicone material with atmospheric moisture which could lead to premature vulcanisation or curing of the silicone material.

For use, the compositions of this invention can be applied to a substrate, for example, a leather boot or shoe, by simply wiping or brushing them on with a cloth or brush.

Once the coating has dried and cured, it is, in the case of the clear and transparent compositions, substantially· invisible. Naturally, if a pigment or dyestuff is included, the coating is visible. The cured coating is flexible and bendable and can stretch as the substrate itself stretches so that it provides a tough impervious exterior coating.

It will be appreciated that the compositions of this invention will frequently be applied to footwear which has previously been worn, cleaned and/or polished. In fact, before applying such compositions to an item of footwear, it will generally be desired to clean and polish such an item so that, after the composition has been applied, the item of footwear will have an attractive aesthetic appearance. A further advantage presented by the compositions of this invention is that satisfactory bonding of the coatings is obtained despite the presence of an underlying wax or other polish component material.

The cured coatings effectively resist attack by a variety of chemicals such as salt and the like which are thereby maintained out of contact with the substrate material.

If desired, the cured coating can be removed by rubbing and peeling. If it is damaged, for example, by scuffing or by kicking a hard object, the coating can readily be repaired over the damaged area.

Thicker coating layers can be built up by applying successive layers in the same way as successive coats of paint can be applied.

In addition to the coating compositions and coated substrates provided by this invention as hereinbefore defined, this invention also embraces a method of forming a flexible polymer film coating on a substrate and which method comprises applying to such a substrate a flowable and paintable coating composition as already defined and exposing the applied coating to the atmosphere to permit both the evaporation of the solvent and the curing of the silicone material by reaction of the acetoxy groups therein with atmospheric moisture, the solvent being of such volatility and being present in such an amount that evaporation of such solvent is essentially complete before the formation of a solvent-barrier skin on the surface of the applied coating.

The invention will now be described merely by way of illustration in the following Examples.

Example 1

A coating composition was prepared by mixing the aforementioned Lepage silicone material with Varsol in various relative proportions by volume as shown in Table I, using relatively minor proportions of the materials Sheffield Japan Dryer and Brite N' Clear hereinbefore identified.

## TABLE I

| Component | Composition | | |
|---|---|---|---|
| | 1a | 1b | 1c |
| Lepage silicone material | 26.15 | 66.23 | 82.79 |
| Varsol solvent | 73.21 | 33.15 | 16.56 |
| Sheffield Japan Dryer | 0.62 | 0.62 | 0.62 |
| Brite N' Clear | 0.03 | 0.03 | 0.03 |

The compositions 1a, 1b and 1c were applied to shoes and it was noted that Composition 1b gave excellent results while Composition 1a was somewhat slow drying due to the excessive proportion of solvent present. Composition 1c, on the other hand, cured rapidly but was somewhat difficult to apply due to its high viscosity and stickiness.

Example 2

The compositions indicated in Table II were prepared using the same Lepage silicone material and the same Varsol solvent in the volume proportions indicated. These compositions were applied to a sample sheet of leather in "thick" and "thin" layers. The thick layers had an applied uncured thickness of 1.0 mm while the thin coatings had a thickness immediately after application of 0.4 mm.

The drying behaviours of these films were recorded as they proceeded and the results indicated were obtained.

## TABLE II

| Test # | Composition (%) | | Time to initial Cure | | Consistency |
|--------|---------|---------|-------|------|-------------|
|        | silicone | solvent | Thick | Thin |             |
| 2a     | 100     | 0       | <30'  | <30' | Too thick   |
| 2b     | 75      | 25      | <30'  | <30' | barely flowable |
| 2c     | 60      | 40      | 30'   | 30'  | quite flowable |
| 2d     | 50      | 50      | 40'   | 35'  | freely flowable |
| 2e     | 43      | 57      | 45'   | 40'  | freely flowable |
| 2f     | 40      | 60      | >60'  | >60' | very flowable |
| 2g     | 33      | 67      | >180' | >180'| almost liquid. |

It will be noted that, for this particular silicone material/solvent combination, the desired flowability was just about obtained at a solvent content of 40% v/v. Increasing the amount of solvent increased the time to initial cure, suggesting that a maximum solvent content of about 60% v/v applies for this particular combination. Additionally, a tendency for bubbles to form in the "thick" cured coating was noted at the higher solvent contents.

Example 3

In the same manner as described in Example 2, the compositions identified in Table III were prepared using the Silastic 732 silicone material and the same Varsol solvent.

## TABLE III

| Test # | Composition (%) | | Time to initial cure | | Consistency |
|--------|---------|---------|-------|------|-------------|
|        | silicone | solvent | Thick | Thin |             |
| 3a     | 50      | 50      | 30'   | 25'  | quite flowable |
| 3b     | 40      | 60      | 55'   | 55'  | freely flowable |

It will be noted that these results illustrate the same effect of increasing solvent level as do the results of Example 2, but demonstrate that a more rapid cure is obtained with the Silastic 732 silicone material than was obtained with the Lepage silicone material. Again, a tendency to bubble formation was noted in the thick coating at the higher solvent level.

Example 4

The same silicone material as was used in Example 3 was tested in the same manner as a 50% v/v solution in each of the solvents indicated in Table IV.

## TABLE IV

| Test # | solvent | Time to initial cure | |
|---|---|---|---|
| | | Thick | Thin |
| 4a | n-heptane | 20' | 15' |
| 4b | di-n-butylether | 100' | 80' |
| 4c | benzene | 35' | 25' |
| 4d | butanone-2 | 30' | 30' |
| 4e | tetrachloroethylene | 30' | 25' |
| 4f | xylenes | 30' | 25' |

In all these tests, satisfactory cured films were obtained with the exception of the "thick" films using xylenes and tetrachloroethylene as the solvent. In those tests, bubbles appeared under the cured film skins.

In evaluating the solvents listed in Table IV, compositions were prepared with 25%, 40% and 50% v/v solvent levels and, for each and every solvent, the resulting compositions had good flowability at the 40% and 50% levels but were somewhat sticky or overly viscous at the 25% solvent level.

Example 5

The other silicone materials identified in Table V were evaluated in the same manner in 50/50 v/v solutions in n-heptane, the results shown being obtained.

## TABLE V

| Test # | silicone material | Time to initial cure | |
|---|---|---|---|
| | | Thick | Thin |
| 5a | CGE | 25' | 20' |
| 5b | CSL | 35' | 25' |
| 5c | Dow Corning 786 | 25' | 20' |
| 5d | Silastic 734 | 20' | 20' |

The n-heptane proved to be a very effective solvent for all these silicone materials. It is further to be noted that the Silastic 734 silicone material gave a cured film of exceptionally good clarity.

Example 6

Equal parts of the Silastic 732 silicone material and Varsol were mixed and the resulting solution was applied to a sheet of leather by wiping it thereon with a piece of cloth and with a paper towel. Further applications were made using a foam plastic pad. In all cases, the material applied without difficulty and the coatings were cured without any bubble formation within about 25 minutes. It is perhaps to be noted that these cured coatings were seen to be somewhat thinner than the "thin" films described in the preceding Examples.

A further sample of this composition was applied using the foam plastic pad to a somewhat dirty boot which, although it had previously been polished, was merely wiped clean prior to the application of the coating composition. A satisfactory cured film was obtained which showed excellent bonding to the boot despite the presence of shoe polish and some visually obvious residual dirt.

**Claims**

1. A flowable and paintable coating composition especially intended for application to footwear and which composition comprises a room temperature vulcanisable one-component silicone material containing reactive acetoxy groups and adapted to cure to a flexible polymer upon exposure to atmospheric moisture with the release of acetic acid and a volatile solvent for said silicone material, said solvent being unreactive with said silicone material and being present in an amount sufficient to soften said silicone material to provide a flowable and paintable composition but in an amount no greater than that which is capable of freely evaporating from a film of such composition during the curing of such a film after application of such a composition as a film to a substrate.

2. A flowable and paintable coating composition as claimed in Claim 1 and in which said silicone material comprises a polydimethylsiloxane.

3. A flowable and paintable coating composition as claimed in either of Claims 1 and 2 and in which said acetoxy groups are present in a cross-linking comonomer present together with said polydimethylsiloxane in said silicone material.

4. A flowable and paintable coating composition as claimed in any of Claims 1 to 3 and which also comprises a minor amount of a catalyst or drying agent capable of accelerating the curing of said silicone material.

5. A flowable and paintable coating composition as claimed in Claim 4 and in which said catalyst is Sheffield Japan Dryer.

6. A flowable and paintable coating composition as claimed in Claim 5 and in which said catalyst is cobalt naphthenate.

7. A flowable and paintable coating composition as claimed in any of Claims 1 to 6 and in which said solvent is selected from the class consisting of turpentine, petroleum distillates, unsubstituted and substituted aliphatic and aromatic hydrocarbons, ethers and ketones.

8. A flowable and paintable coating composition as claimed in Claim 7 and in which said solvent is selected from the class consisting of Varsol, n-heptane, xylenes, benzene and butanone-2.

9. A flowable and paintable coating composition as claimed in any of Claims 1 to 8 and in which said solvent is present to the extent of from about forty percent to about sixty percent based on the total volume of said solvent and said silicone material.

10. A coated substrate having disposed thereon a cured film of a composition as claimed in any of Claims 1 to 9.

11. A coated substrate as claimed in Claim 10 and in which said substrate is leather or canvas.

12. A coated substrate as claimed in either of Claims 10 and 11 and in which said substrate is an item of footwear.

13. A coated substrate is claimed in Claim 12 and in which said item of footwear has a coating of polish beneath said cured film.

14. A method of forming a flexible polymer film coating on a substrate which comprises applying to said substrate a flowable and paintable coating composition as claimed in any of Claims 1 to 9, exposing said applied coating to the atmosphere to permit the evaporation of said solvent from the applied coating and the curing of the silicone material by reaction of the acetoxy groups therein with atmospheric moisture, said solvent being of such volatility and being present in such an amount that the evaporation of such solvent is essentially complete before the formation of a solvent barrier skin on the surface of such applied coating.